# EUROPEAN PATENT APPLICATION

(11) **EP 4 838 373 A1**
(43) Date of publication of application: **11.11.2026**
(21) Application number: 25175247.3
(22) Date of filing: 09.05.2025
(51) Int. Cl.: G06F 16/22, G06F 16/901

(54) **METHOD OF STORING AND QUERYING MEASUREMENT DATA**

(71) Applicant: Bruker Belgium N.V., 2550 Kontich (BE); Bruker Daltonics GmbH & Co. KG, 28359 Bremen (DE)
(72) Inventor: WILLEMS, Sander, 2550 Kontich (BE); NEUWEGER, Heiko, 28359 Bremen (DE)
(74) Representative: Piticco, Lorena

(57) **Abstract**

A method of storing measurement data of a measurement system in a database on a non-transitory tangible computer-readable storage medium comprises i) obtaining *M* unique *N-*dimensional coordinates being associated with the measurement data, ii) transforming the *M* unique *N*-dimensional coordinates with a bijection to 1-dimensional coordinates, iii) building a prefix tree derived from the *M* unique 1-dimensional coordinates, iv) serializing the prefix tree, and v) writing the serialized prefix tree to the non-transitory tangible computer-readable storage medium. A method of querying a database for a subset of measurement data comprises i) querying for at least one subset of measurement data in the database by traversing parts of the prefix tree while querying for at least one subset of 1D coordinates associated with said subset of measurement data.

## Description

### TECHNICAL FIELD

The present invention relates to a method of storing measurement data of a measurement system in a database according to claim 1, to a method of querying a database comprising measurement data of a measurement system according to claim 9, to a computer program product causing a processor to perform these methods according to claim 14, and to a measurement system comprising a processor configured to perform these methods according to claim 15.

### PRIOR ART

Measurement systems such as TIMS-TOF (Trapped Ion Mobility Time-Of-Flight) mass spectrometers acquire billions of measurement data per sample, requiring much disk space for storage. Currently, storing measurement data of common liquid or gas chromatography (LC or GC) separated samples typically requires hundreds of GB per measurement system per day. In other applications, e.g. Mass Spectrometry Imaging (MSI), storing measurement data from just a single sample can already require hundreds of GBs of disk space. As a result, use cases such as clinical studies that require large sample cohorts with many replicates can yield tera- or even petabytes of unprocessed data. Processing these measurement data in its entirety thus becomes challenging due to RAM constraints, especially for MSI due to single samples being so large. The solution generally is to require processing in smaller batches and multiple (modular) steps which frequently duplicates (parts of) the data, yet again requiring more disk space, and at the same time worsening analysis speeds. With technological advancements for such measurements systems, measurement data is expected to increase even more, thereby exacerbating the problem.

Different data formats can be used to store data from various measurement systems. For TIMS-TOF mass spectrometers, one such format is TDF (TIMS-TOF data format). This format is optimized for serialization during acquisition, e.g. first ordered in the retention time (RT) which are stored by frame indices, second in the ion mobility (IM) domain which are stored by scan indices and last in the m/z (mass over charge) domain which are stored as time-of-flight (TOF) indices. In the case of MSI, the first order is the X coordinate of the rasterized imaging sample, the second order is the Y coordinate of the rasterized imaging sample, the third is the IM domain stored as scan indices and last is the m/z domain stored as TOF indices. While this format is sensible from an acquisition perspective, it is not ideal from a storage or analysis perspective:
By storing the data sequentially as exemplified above, only the density in the last dimension is considered. However, measurement data often is structured in multiple dimensions, resulting in repetitive or at least comparable values in all these dimensions. For LC-TIMS-TOF data, this is exemplified by extracted ion chromatograms (XICs) or mobilograms (XIMs) of individual ion species that follow various distributions rather than being a list of sparse values. For MSI data, ion species form clear structures in the X and Y dimensions of the rasterized image as these naturally correlate with the tissue. As these structures, i.e. changes in density, are not present in the TDF, the entropy is not optimized.

Furthermore, the sparsity of the data means that not all domains are represented by fixed length arrays. For TDF, the first domains are all dense, whereas the last dimension, i.e. the TOF domain, is sparse, i.e. only non-zero values are present. This means that while querying the data this variability in array sizes must be considered, making it difficult to perform efficient random access. For instance, searching in the TOF domain is most easily done with a binary search on a per scan basis. This is reasonable when data is also accessed sequentially such as for MS2 spectra as acquired with data dependent acquisition (DDA) but is prohibitive for e.g. XIC/XIM extraction or for image retrieval for MSI data.

### SUMMARY OF THE INVENTION

It is an object of the present invention to overcome the drawbacks of the prior art. In particular, in a first aspect, it is an object to provide an improved method of storing measurement data. In a second aspect, it is an object to provide an improved method of querying measurement data.

The first object is achieved with a computer-implemented method as claimed in claim 1. That is, in a first aspect a computer-implemented method of storing measurement data of a measurement system in a database on a non-transitory tangible computer-readable storage medium is provided. The method comprises the steps of i) obtaining *M* unique *N-*dimensional coordinates being associated with the measurement data, ii) transforming the *M* unique *N*-dimensional coordinates with a bijection to 1-dimensional coordinates, whereby *M* unique 1-dimensional coordinates are obtained, iii) building a prefix tree from the *M* unique 1-dimensional coordinates to represent these 1D coordinates, iv) serializing the prefix tree, and v) writing the serialized prefix tree to the non-transitory tangible computer-readable storage medium.

That is, in the first aspect the present invention provides a method of storing measurement data of a measurement system to a non-transitory tangible computer-readable storage medium. In particular, the method according to this first aspect preferably enables the provision of a database that is then stored, i.e. written to the non-transitory tangible computer-readable storage medium. In particular, the prefix tree preferably provides the database, that can then be stored on the non-transitory tangible computer-readable storage medium.

In a further aspect, the present invention also provides a method of querying such a prefix tree or database, respectively, as will be explained in greater detail further below.

The non-transitory tangible computer-readable storage medium preferably is a permanent storage such as a disk, a cloud, etc.

The measurement data can comprise, for instance, various biochemical and/or physical properties such as hydrophobicity, collisional cross section (CCS), mass over charge ratio (m/z), X and Y coordinates in a rasterized image, etc.

Thus, the measurement data is preferably generated by at least one measurement system, for instance, a mass spectrometer setup comprising several separation techniques such as liquid chromatography (LC), trapped ion mobility separation (TIMS), time-of-flight (TOF), etc. In the case of mass spectrometry imaging (MSI) measurement system, additional measurement data such as the X and Y coordinates in a rasterized plane can be acquired. Measurement data from other measurement systems are of course likewise conceivable.

The measurement data can be obtained from at least one measurement system while the measurement system performs at least one measurement, i.e. while being acquired, the measurement data can immediately be converted to the format according to the invention. However, it is likewise conceivable that the measurement data is obtained from at least one archived format, i.e. also existing measurement data can be converted to the format according to the invention. In other words, the method according to the invention can be coupled to at least one measurement system and/or can be configured to convert and/or archive existing formats. Again, in other words, the measurement data can be obtained from a stored traditional raw format and can then be converted and stored with the method according to the invention, or the measurement data can be directly converted and stored with the method according to the invention. In any case, the method according to the invention enables a conversion of measurement data without loss of information to save disk space for e.g. long-term archival. Hence, in a first aspect, the method according to the invention enables savings in disk space. Moreover, and as will be explained in greater detail below, in a second aspect the method according to the invention also enables savings in processing time.

The measurement data can be obtained from a variety of samples such as a biological or chemical samples, e.g. blood plasma, a tissue such as brain tissue, lung tissue, etc. However, other samples are likewise conceivable.

The coordinates associated with the measurement data preferably are integer coordinates and/or are countable. For instance, in the event of the measurement data originating from a measurement system comprising a TOF mass spectrometer, the coordinates are TOF indices which are directly related to m/z values. In the event of the measurement data originating from a measurement system comprising a TIMS cell, the coordinates comprise scan indices which are directly related to ion mobility values and their associated CCS values. More generally expressed, the measurement data corresponding, for instance, to LC-TIMS-TOF measurement data can be provided in the coordinates:
1) frame index related to retention time (RT) and associated hydrophobicity,
2) scan index related to ion mobility (IM) and associated CCS, and
3) TOF index related to m/z

In any case, the present invention is based on the insight that instead of storing the measurement data as *M* unique *N*-dimensional coordinates, i.e. as multidimensional coordinates, they can instead be converted to 1-dimensional coordinates. Since the prefix tree represents these 1D coordinates, the prefix tree contains the exact same information as these coordinates.

The *M* unique *N*-dimensional coordinates are preferably obtained as a collection, such as a set, a list, an array, a vector, etc. as it is well-known in the art.

In the step of obtaining the *M* unique *N*-dimensional coordinates, values associated to these M unique coordinates are preferably also obtained. In such a case, values need to be stored alongside these coordinates.

For instance, in the event of the measurement data originating from a measurement system comprising a TOF mass spectrometer, the coordinates are TOF indices which are directly related to m/z values and their respective values are the associated intensity values. In the event of the measurement data originating from a measurement system comprising a TIMS cell, and a TOF mass spectrometer, the coordinates with their respective values comprise scan indices which are directly related to ion mobility values and their associated CCS values, TOF indices which are directly related to m/z values and the associated intensity-values. More generally expressed, the measurement data corresponding, for instance, to LC-TIMS-TOF measurement data can be provided in the coordinates:
1) frame index related to retention time (RT) and associated hydrophobicity,
2) scan index related to ion mobility (IM) and associated CCS,
3) TOF index related to m/z, and
the respective values can be the associated intensity values.

The step of transforming the *M* unique *N*-dimensional coordinates with a bijection to 1-dimensional coordinates preferably comprises the application of at most *N* component functions to each of the *M* unique *N*-dimensional coordinates, whereby *N***M* transformed coordinates are obtained, and wherein preferably the transformation comprises the summation of the *N* component functions.

That is, the *M* unique *N*-dimensional coordinates are preferably converted with a bijection comprising a combination of at most *N* component functions to 1D coordinates.

A bijective transformation *f*(*x*₁, *x*₂, ... , *xₙ*) = *y* has the advantage that no information is lost. To this end, component functions are preferably used to transform each of the N dimensions independently and preferably are summed together such that *f*(*x*₁, *x*₂, ... , *xₙ*) *= f*₁(*x*₁) *+ f*₂(*x*₂) *+* ···+ *fₙ*(*xₙ*) *= y,* but other bijective transformations are likewise conceivable.

As already mentioned, the coordinates are preferably integer coordinates. To ensure a bijection, a component function preferably shifts the bits of a binary representation such that they occupy a unique set of bits for this dimension. For instance, for an N-dimensional coordinate x, the coordinate *xᵢ* in the *i*-th dimension, expressed in binary as *aₘ* · 2*^{m}* + ··· + *a*₁ · 2¹ + *a*₀ · 2⁰ with *aᵢ* ∈ {0, 1} can utilize the component function *fᵢ*(*xᵢ*) = *aₘ* · *2^{m+b^{m}} +* ··· + *a*₁ · 2^{1+*b*¹} + *a*₀ · 2^{0+*b*⁰} with *bₘ* ≥ ··· ≥ *b*₁ ≥ *b*₀ and *bₖ* ∈ {0, 1, 2, ... }. If for all dimensions *i* and *j* all *k + bₖ* are different and cover all positive integers {0, 1, ..., Z}, the summation *f*(*x*₁, *x*₂, ... , *xₙ*) *= f*₁(*x*₁) *+ f₂*(*x*₂) *+* ··· + *fₙ*(*xₙ*) = *y* indeed ensures a bijection. Other component functions are likewise conceivable.

Converting the *M* unique *N*-dimensional integer coordinates to 1-dimensional integer coordinates is in contrast to the solutions of the prior art, wherein measurement data such as mass spectrometry data in general and LC-TIMS-TOF measurement data in particular are typically stored in a matrix or array format. For example, MS spectra are typically stored as a list of m/z-intensity pairs with metadata describing other coordinates such as RT or IM. In the case of TIMS-TOF, raw measurement data comprises multiple sequential scans that each contain alternating TOF differences and intensities. Hence, when coupled to an LC that acquires a list of sequential arrays such measurement data can be interpreted as a list of compressed sparse row matrices (CSRs). The same applies to measurement data obtained from other measurement systems.

It is preferred that a function *f*(*x*₁, *x*₂, ... , *xₙ*) is used to transform N-dimensional coordinates that are close in an N-dimensional metric to 1-dimensional coordinates that are also close in 1D. For instance, in LC-TIMS-TOF data multiple detections from the same ion species frequently fall within 3 seconds in the RT domain, within 0.01 *1*/*K₀* in the IM domain and within 10 parts per million (ppm) for the m/z domain. After transformation, 1-dimensional points from the same ion species preferably would differ by for instance at most 2⁹ = 512 such that densely clustered detections of the ion species in 3D also from dense clusters in 1D. As a result, a more efficient serialization and/or querying is achieved. However, other functions are likewise conceivable.

As there are many clusters in e.g. the 3D LC-TIMS-TOF measurement data such as ion species detected in roughly Gaussian patterns for the RT (frame), IM (scan) and m/z (TOF) domain, many points have similar prefixes. For MSI, ion species are detected in structured spatial patterns for the X and Y coordinates.

In the method according to the invention, the 1-dimensional coordinates are then converted to a prefix tree. In other words, a prefix tree for the *M* unique 1-dimensional coordinates is built to represent these coordinates.

In the step of building the prefix tree, the 1D coordinates are preferably represented in base *x*, particularly preferably in base 8.

Since the *M* unique 1-dimensional coordinates are all still unique after the bijective transformation, they can be represented by using a prefix tree. This can for instance be done by representing the 1D coordinates in a base x such as base 2 (binary), base 8 (octal) or base 10 (decimal), but other representations are likewise conceivable. Prefix trees and their representations, for instance binary trees, are well-known in the art of computer science.

Said preferable octal representation simplifies further implementations of the method according to the invention. The same is true for any representation with base *x* a multiple of 8, but other representations are likewise conceivable.

The prefix tree can optionally be pruned to discard certain branches. This can be done on any criterium, including but not limited to branch density.

Said step of pruning the prefix tree also serves the purpose of denoising the measurement data.

Said step of pruning the prefix trees also serves the purpose of reducing storage requirements, albeit at the cost of not being lossless anymore. This is because if the tree is pruned, at least one 1D coordinate is lost and thereby also at least one of the *M* unique *N-*dimensional coordinates of the obtained measurement data.

Pruning can be done, for instance by utilizing the density of a branch, i.e. the number of present nodes divided by the total number of possible nodes with the same prefix, i.e. on the same branch, as criterion for pruning and thereby remove those parts of the raw data that are extremely sparsely populated.

Prior to serializing the prefix tree, the prefix tree is preferably split into at least one subtree, and wherein each of the subtrees provides an independent prefix tree.

Large lists of coordinates lead to large prefix trees. To avoid having to deal with the whole prefix tree at once, it can be split into at least one independent smaller subtree by partitioning the list of coordinates.

Said splitting of the prefix tree is very beneficial to reduce memory usage and querying as will be explained in greater detail below.

Each of the at least one subtree can then individually be used as independent prefix tree in the further method steps such as the serialization and the writing to the non-transitory tangible computer-readable storage medium. That is, any explanations made herewith regarding a prefix tree preferably likewise apply to at least one subtree that emerged from the prefix tree upon splitting and vice versa.

After splitting the prefix tree into the at least one subtree, the at least one subtree is preferably indexed, particularly preferably with another prefix tree.

When subtrees are used to split up a larger prefix tree, the subtrees can be constructed such that all of the subtrees coincide with independent branches of the original prefix tree. This can for instance be done by splitting the original prefix tree at a certain branch depth, but other splitting methods are likewise conceivable.

To quickly access all subtrees, their addresses, either in memory or on a storage device, can be indexed, preferably with another prefix tree which is herein called a supertree. Other indexing methods are likewise conceivable.

The 1D coordinates of this supertree can for instance be chosen as the smallest prefix present in each subtree. The addresses of these subtrees can then be used as values associated with these coordinates as described above. Other implementations of the supertree are likewise conceivable.

A supertree can then individually be used as independent prefix tree in the further method steps such as the serialization and the writing to the non-transitory tangible computer-readable storage medium. That is, any explanations made herein regarding a prefix tree preferably likewise apply to the supertree emerged from the prefix tree upon splitting and vice versa.

The prefix tree is preferably represented in base *x*. In the step of serializing the prefix tree, each node of the prefix tree is preferably represented as a string of *x* bits with bit *i* set to 1 in the event that said node has a direct descendent *i*. The thus serialized nodes are then preferably concatenated either breadth-first or depth-first while ensuring a lexicographical ordering of the 1D coordinates when the tree is traversed.

There are many ways to serialize a tree. As a goal of this first aspect of the invention is to reduce storage requirements for measurement data, the prefix tree is preferably serialized such that a lexicographic ordering of coordinates when traversing the tree removes the need to store explicit pointers between nodes. Other serializations are likewise conceivable though.

A tree can be traversed either depth-first or breadth-first in an order consistent with the lexicographic ordering of coordinates represented in base *x*. The order in which the nodes are visited is also the order in which they are concatenated for the tree serialization.

To serialize a node, a string of *x* bits is preferably used, with bit *i* set to 1 if and only if it has a descendent *i*. As the tree is constructed by using 1D coordinates which have a fixed length *L* when represented in base *x*, leaf nodes with a representation of 0 occur only at depth *L* and hence do not need to be explicitly serialized.

When a prefix tree is represented in an octal representation, the serialization of a single node is exactly one byte, simplifying its interpretation and computational implementation.

Once the prefix tree is serialized, the resulting bytes are preferably written to the non-transitory tangible computer-readable storage medium. This can be done either directly, or after another compression step as explained now.

Prior to writing to the non-transitory tangible computer-readable storage medium, the serialized prefix tree is preferably compressed.

That is, once a prefix tree (or if applicable a subtree or supertree) is serialized, a resulting byte stream is preferably compressed before being written to the non-transitory tangible computer-readable storage medium.

Once a prefix tree (or if applicable a subtree or supertree) is serialized, any compression algorithm can be used to compress the resulting bytes, for instance with zstd (Zstandard) or LZ (Lempel-Ziv) compression as it is well-known in the art. Other compression algorithms are likewise conceivable.

Depending on the density and amount of repetition in a prefix tree (or if applicable a subtree or supertree), this can significantly reduce space requirements.

For instance, in the case of LC-TIMS-TOF measurement data, the prefix tree itself can have many repetitive paths as different ion species that are related such as fragments from the same precursor or naturally occurring isotopes will have similar branches differing only in the TOF domain.

The values associated to the coordinates are preferably serialized by reordering the values such that their associated 1D coordinates are sorted lexicographically.

Since values are associated to specific coordinates, this association needs to be retained when serializing both the values and the coordinates.

As the original *N*-dimensional coordinates are unique, the bijective transformation also ensures the 1D coordinates are unique. Therefore, there is only one unique way to lexicographically sort these 1D coordinates. Since the coordinates have a unique lexicographically order, the same order can also be used for the values. As a result, the values are unambiguously associated to the correct coordinates, regardless of how the coordinates themselves or their prefix tree representation are serialized.

If coordinates are grouped into subgroups by forming subtrees, the values associated to these coordinates are likewise split while still being associated with their respective coordinates of the subgroups.

If coordinates are pruned by pruning (sub)tree(s), the values associated to these coordinates are likewise pruned while still being associated with their respective coordinates of the subgroups.

The reordered (pruned) values associated to these (sub)tree(s) are then serialized by serializing their individual values to bytes and concatenating these bytes. For example, if values are represented by a u32, this can be serialized to 4 bytes in for instance big or little endian. Other serializations of individual values are likewise conceivable.

Prior to writing to the non-transitory tangible computer-readable storage medium, the serialization of the values associated to the coordinates is preferably compressed. Before compression of the values, positional bytes from each value are preferably concatenated to improve compression performance.

That is, once values associated to the coordinates are serialized, the resulting byte stream is preferably compressed before being written to the non-transitory tangible computer-readable storage medium.

Once values associated to the coordinates are serialized, any compression algorithm can be used to compress the resulting bytes, for instance with zstd (Zstandard) or LZ (Lempel-Ziv) compression as it is well-known in the art. Other compression algorithms are likewise conceivable.

Since many values are small, they often can be compressed to save storage space.

Since many compressors take bytes and are unaware of structures bytes such as u32, it is often beneficial to do a byte reordering such that the most significant bytes of each value are grouped together.

For instance, the serialized values can be reordered such, that the first byte of all u32 values are concatenated, then the second byte of all u32 values, then the third byte of all values, etc.

Thus, during serialization of the values, positional bytes from each value are preferably concatenated together rather than first concatenating the bytes per value before concatenating all values.

In a second aspect, a computer-implemented method of querying a database for a subset of measurement data is provided. The database comprises measurement data of at least one measurement system and has been provided by the steps of i) obtaining *M* unique *N-*dimensional coordinates being associated with the measurement data, ii) transforming the M unique N-dimensional coordinates with a bijection to 1-dimensional coordinates, whereby M unique 1-dimensional coordinates are obtained, and iii) building a prefix tree from the M unique 1-dimensional coordinates to represent these 1D coordinates. The method of querying the database comprises the step of querying for at least one subset of measurement data in the database by traversing parts of the prefix tree while querying for at least one subset of 1D coordinates associated with said subset of measurement data.

Said database preferably corresponds to a database that is generated in the method according to the first aspect of the invention explained above. Hence, it is preferred that the method of querying the database is preferably performed in a database comprising measurement data of at least one measurement system that have been converted to a prefix tree in the method according to the first aspect of the invention. Thus, any explanations made herein with regard to the method according to the first aspect and/or of constructing a prefix tree preferably likewise apply to the method of querying the database according to the second aspect and vice versa.

Examples of queries are for instance fixing one point or a small range in one or more dimensions and retrieving all coordinates and optionally values from all other ranges. For an LC-TIMS-TOF measurement system this can for instance be an XIC or XIM of a specific m/z value within a small window of a few ppm.

The querying is very efficient, as the prefix tree can efficiently be traversed. Since each node corresponds to a prefix, it can quickly be checked if this prefix satisfies the query. If the prefix of a node indeed satisfies the query, all descendent nodes can then be processed in the same manner. Moreover, if the prefix of a node does not satisfy the query, none of its descendants will satisfy the query either. As a result, large parts of the tree do not need to be traversed at all, saving a lot of time.

Once the query is completed, the subset of measurement data, i.e. a subset of the N-dimensional coordinates, can then be used for further processing.

As mentioned earlier, after building the prefix tree, the provision of the database preferably further comprises the steps of serializing the prefix tree and writing the serialized prefix tree to a non-transitory tangible computer-readable storage medium. In this case, the method of querying the database preferably further comprises the step of deserializing the prefix tree before querying. In other words, if a prefix tree is stored on a non-transitory tangible computer-readable storage medium, it needs to be read from storage and is preferably deserialized.

If the prefix tree was compressed after serialization, it needs to be decompressed after deserialization. Hence, in this case the method of querying the database preferably further comprises the step of decompressing the deserialized prefix tree.

As mentioned earlier, in the step of obtaining the *M* unique *N*-dimensional coordinates in the provision of the database, values associated to these *M* unique coordinates are preferably also obtained. In this case, the method of querying the database preferably further comprises the step of retrieving the values associated with the coordinates when performing the query.

That is, when there are values associated to the coordinates retrieved when performing a query, these values are preferably retrieved likewise.

If the values are written to the non-transitory tangible computer-readable storage medium in the provision of the database, the values associated to the prefix tree are preferably read from storage and deserialized.

If the values were compressed after serialization in the provision of the database, they are preferably decompressed after deserialization.

If the values were byte-reordered before compression in the provision of the database, they are preferably byte-reordered after decompression.

As the values are ordered in the same way as the 1D coordinates, an index of a 1D coordinate in the prefix tree suffices to retrieve its associated value, as a value has the same index as its associated 1D coordinate.

As mentioned earlier, when providing the database, the prefix tree is preferably split into at least one subtree and an index, preferably a supertree, and the at least one subtree is written to a non-transitory tangible computer-readable storage medium. In this case, the method of querying the database preferably further comprises the step of querying the index such that only the subtrees with a prefix satisfying the query are deserialized and queried.

When a prefix tree was split into at least one subtree that was written to disk in the provision of the database, it often is not needed to deserialize all subtrees when performing a query. With the help of an index, preferably a supertree, only those subtrees with a prefix satisfying the query need to be deserialized.

If the index is a supertree that was serialized to storage in the provision of the database, the supertree is preferably deserialized in the method of querying the database.

If the index is a supertree that was compressed in the provision of the database, the supertree is preferably decompressed after deserialization in the method of querying the database.

If the index is a supertree that was serialized to storage in the provision of the database, the values associated with the supertree are preferably first deserialized in the method of querying the database

If the index is a supertree that was serialized to storage in the provision of the database, and the values associated with the supertree are compressed in the provision of the database, they are preferably decompressed in the method of querying the database.

If the index is a supertree that was serialized to storage in the provision of the database, and the values associated with the supertree are byte reordered before compression in the provision of the database, they are preferably byte reordered in the method of querying the database.

If there are values associated with the coordinates of the subtrees, they can also be retrieved with the query.

If the values associated with the coordinates of the subtrees are compressed in the provision of the database, they are preferably decompressed after deserialization in the method of querying the database.

If the values associated with the coordinates of the subtrees are byte reordered before compression in the provision of the database, they are preferably byte reordered after decompression in the method of querying the database.

As mentioned earlier, after splitting the prefix tree into the at least one subtree in the provision of the database, the at least one subtree can be indexed, preferably with another prefix tree. In this case, the supertree can be queried for only those subtrees whose prefix satisfies the query.

The addresses of the subtrees satisfying the query can likewise be retrieved as mentioned earlier. That is, the values associated with the coordinates can be retrieved when performing a query.

For each subtree whose prefix satisfies the query, the subtree can be queried as described above.

In any case, the measurement data is preferably mass spectrometry (MS) data and/or mass spectrometry imaging (MSI) data and/or liquid chromatography (LC) data and/or trapped ion mobility separation (TIMS) data and/or time-of-flight (TOF) data and/or combinations thereof. However, measurement data from other measurement systems are likewise conceivable.

The measurement data can be obtained from at least one measurement system while performing at least one measurement or the measurement data can be obtained from at least one archived format.

In a third aspect, a computer program product comprising a non-transitory tangible computer-readable storage medium whose contents cause a processor to perform the methods as described above is provided.

Any explanations made herein regarding the methods according to the first aspect and the second aspect preferably likewise apply to the computer program product according to the third aspect and vice versa.

In a fourth aspect, a measurement system, preferably a mass spectrometer optionally combined with a liquid chromatography (LC) unit and/or an ion mobility separator (IMS) is provided. The measurement system comprises a processor comprising instructions which, when carried out by the processor, causes the processor to carry out the methods as described above.

Any explanations made herein regarding the methods according to the first aspect and the second aspect and the computer program product according to the third aspect preferably likewise apply to the measurement system according to the fourth aspect and vice versa.

The at least one measurement system is preferably configured to measure the measurement data mentioned above.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic of a method of storing measurement data of a measurement system in a database on a non-transitory tangible computer-readable storage medium according to the invention;
- Fig. 2: shows a schematic of a coordinate transformation with a bijection in a method as illustrated in figure 1;
- Fig. 3: shows a schematic of building a prefix tree in a method as illustrated in figure 1;
- Fig. 4: shows a schematic of pruning a prefix tree in a method as illustrated in figure 1;
- Fig. 5: shows a schematic of splitting a prefix tree in a method as illustrated in figure 1;
- Fig. 6: shows a schematic of serializing a prefix tree in a method as illustrate in figure 1;
- Fig. 7: shows a schematic of a method of querying a database for a subset of measurement data according to the invention;
- Fig. 8: shows a schematic of querying a subset of measurement data by traversing only parts of a prefix tree in a method as illustrated in figure 7;
- Fig. 9: show a schematic of decompressing a prefix tree, a supertree and a subtree in a method as illustrated in figure 7;
- Fig. 10: shows measurement data and a schematic of storing said measurement data in a method as illustrated in figure 1.

### DESCRIPTION OF PREFERRED EMBODIMENTS

Aspects of the methods according to the invention are now illustrated with respect to the figures.

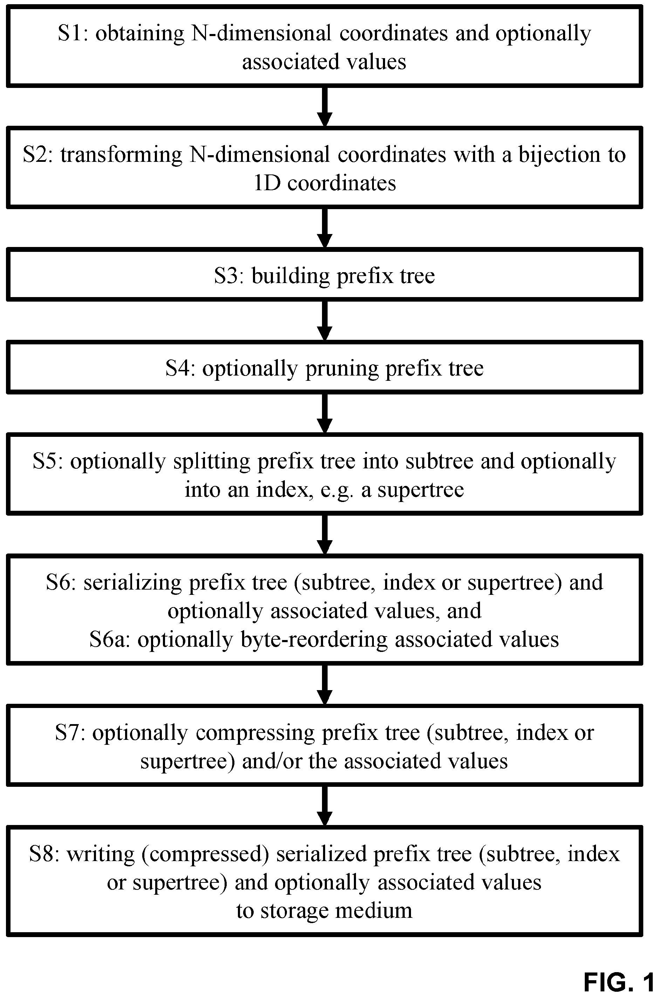

In particular, and as illustrated in figure 1, the method of storing measurement data of a measurement system in a database on a non-transitory tangible computer-readable storage medium can comprise the steps of:
S1: obtaining *M* unique *N*-dimensional coordinates being associated with the measurement data and optionally also the associated values;
S2: transforming the *M* unique *N*-dimensional coordinates with a bijection to 1-dimensional coordinates, whereby *M* unique 1-dimensional coordinates are obtained;
S3: building a prefix tree from the *M* unique 1-dimensional coordinates to represent these 1D coordinates;
S4: optionally, after the step of building the prefix tree, pruning the prefix tree, for instance based on a branch density;
S5: optionally, prior to serializing the (pruned) prefix tree, the (pruned) prefix tree can be split into at least one subtree and optionally into an index such as a supertree;
S6: serializing the (pruned) prefix tree (or the subtree, index or supertree) and optionally the associated values;
S6a: optionally, during serialization, the associated values can be byte-reordered;
S7: optionally, prior to writing to the non-transitory tangible computer-readable storage medium, the (pruned) prefix tree (or the subtree, index or supertree) and/or the associated values can be compressed;
S8: writing the (pruned) prefix tree (or the subtree, index or supertree) and optionally the associated values to the non-transitory tangible computer-readable storage medium.

Steps S1 to S8 are preferably performed in this order.

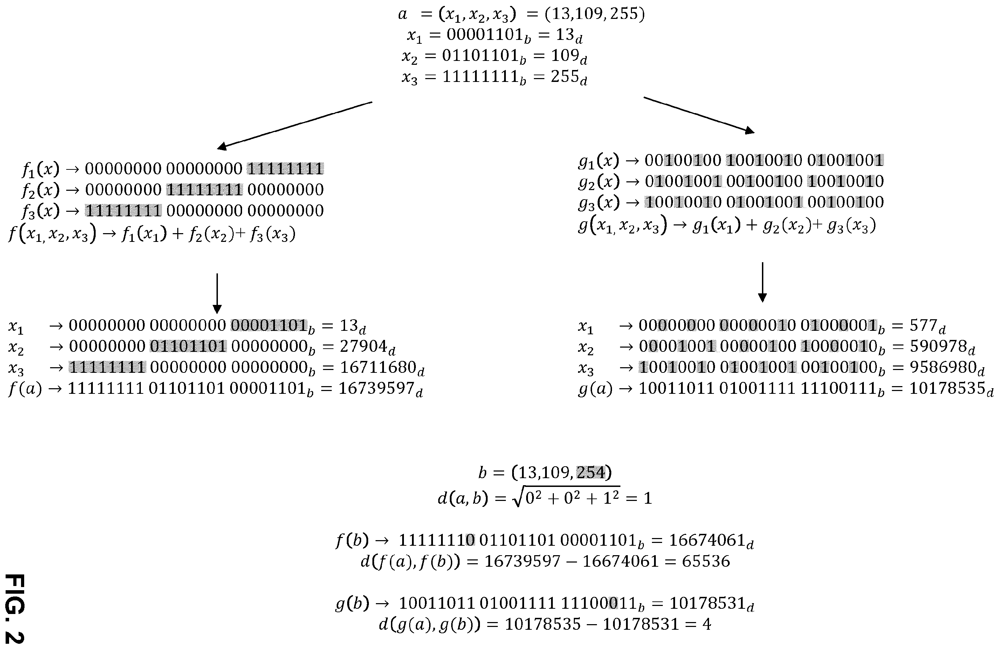

For illustrative purposes only, numerical examples of the method according to the invention are now illustrated with reference to figures 2 to 7.

That is, figure 2 schematically illustrates two numerical examples of a coordinate transformation with a bijection in step S2 of the method illustrated in figure 1. In particular, two bijective transformations *f* and *g* for a 3-dimensional coordinate a are given here. Both *f* and *g* use component functions *fᵢ* and *gᵢ* that transform a coordinate *xᵢ* by repositioning the bits such that the transformed bit coordinates of *x*₁, *x*₂ and *x*₃ are disjunct. The total transformation is then the summation of the component functions which indeed forms a bijection. A second coordinate *b* is also given that is adjacent to point a in *a* Euclidean metric. In 1D however, the distance *d*(*f*(*a*), *f*(*b*)) is larger than the distance *d*(*g*(*a*), *g*(*b*))*.*

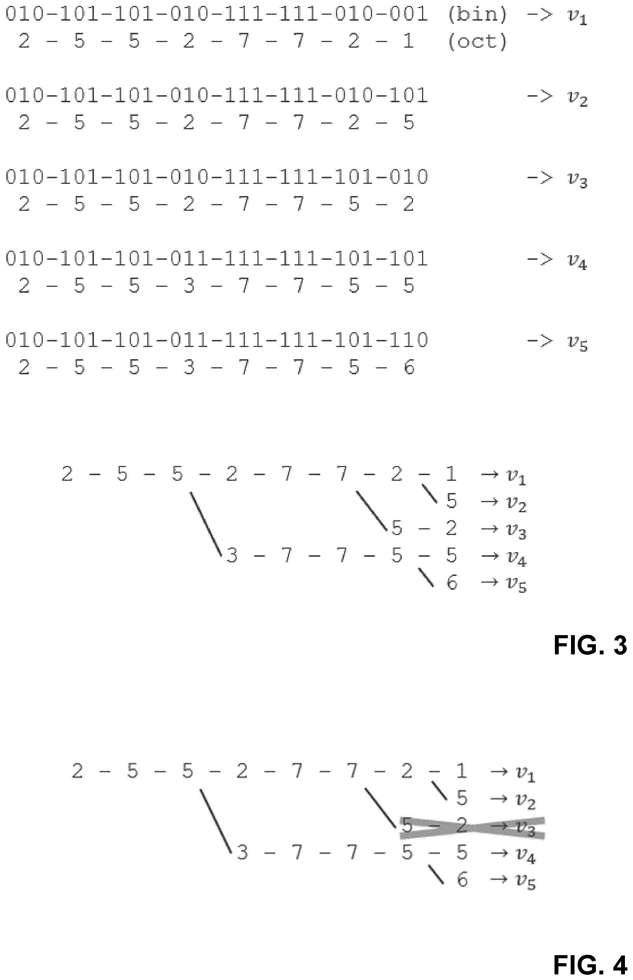

Figure 3 schematically illustrates a numerical example of building a prefix tree in step S3 of the method illustrated in figure 1. Since the M 1-dimensional coordinates obtained in step S2 are all unique, they can be indexed by using a prefix tree. Different representations of the coordinates can be used, each leading to different prefix trees. While any representation can be used, some representations are more efficient than others for serialization and/or accession downstream. Here, five 1-dimensional coordinates are shown in both their binary and octal representation, as well as their associated values. The octal representation is used to create a prefix tree where the tree itself represents the coordinates. The values are then coupled to the leaves of the tree.

Figure 4 schematically illustrates a numerical example of pruning a prefix tree in step S4 of the method illustrated in figure 1. That is, the prefix tree can optionally be pruned to discard certain values. This can be done on any criterium, including but not limited to branch density. As an example, the prefix tree here can be pruned based on density. The crossed-out branch contains only one leaf whereas the branch diverges before the leaf level is reached.

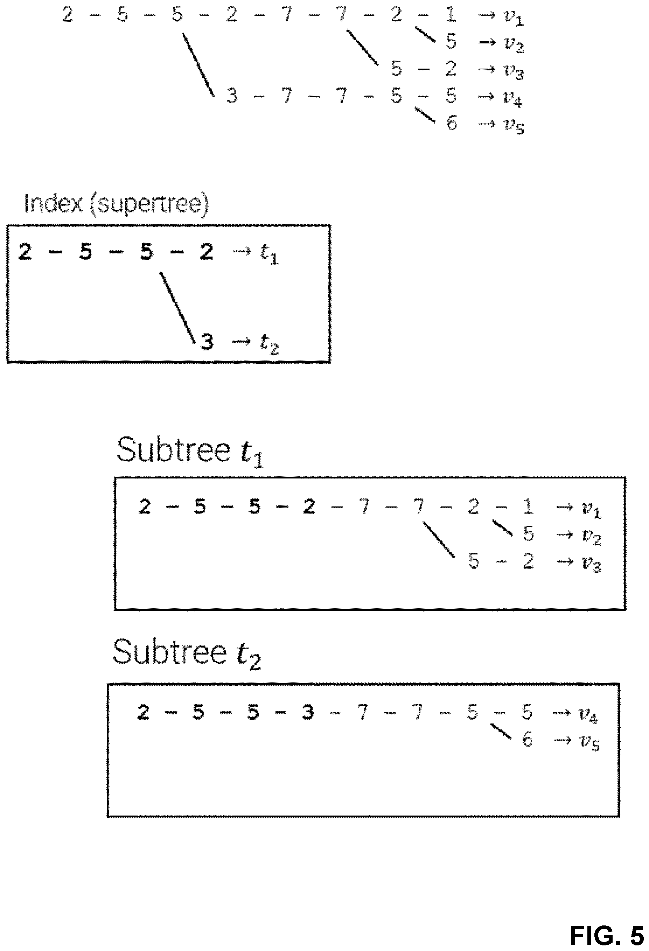

Figure 5 schematically illustrates a numerical example of splitting a prefix tree in step S5 of the method illustrated in figure 1. Large measurement data can lead to large prefix trees. To avoid having to deal with the whole prefix tree at once, it can be split at a certain depth (e.g. layer of the three). This creates a supertree and subtrees. Each of these can then individually be handled as independent trees. While this is an optional step, it is very beneficial to reduce memory usage and accession from disk downstream. In the example here, the tree is split at depth 4, leading to the supertree (*t*₀) and 2 subtrees (*t*₁ and *t*₂).

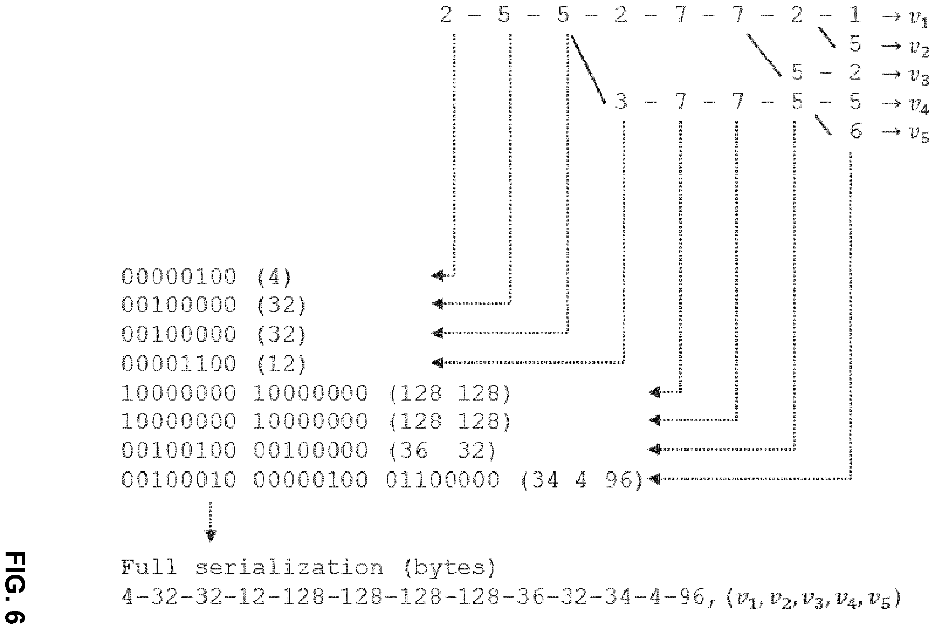

Figure 6 schematically illustrates a numerical example of serializing a prefix tree in step S6 of the method illustrated in figure 1. To serialize the prefix tree, it is converted to bytes. There are many ways to do so. In the depicted example, an octal representation was chosen for the prefix tree. Each node is therefore converted to a byte, where a bit *i* is set to 1 if it has descent *i*. The thus serialized nodes are then preferably concatenated either breadth-first or depth-first while ensuring a lexicographical ordering of the 1D coordinates when the tree is traversed. In this case, a breadth-first approach is depicted. If ordered lexicographically, no additional information is needed to ensure an unambiguous serialization. The sorting furthermore ensures an unambiguous ordering for the values, which can be serialized by any other means.

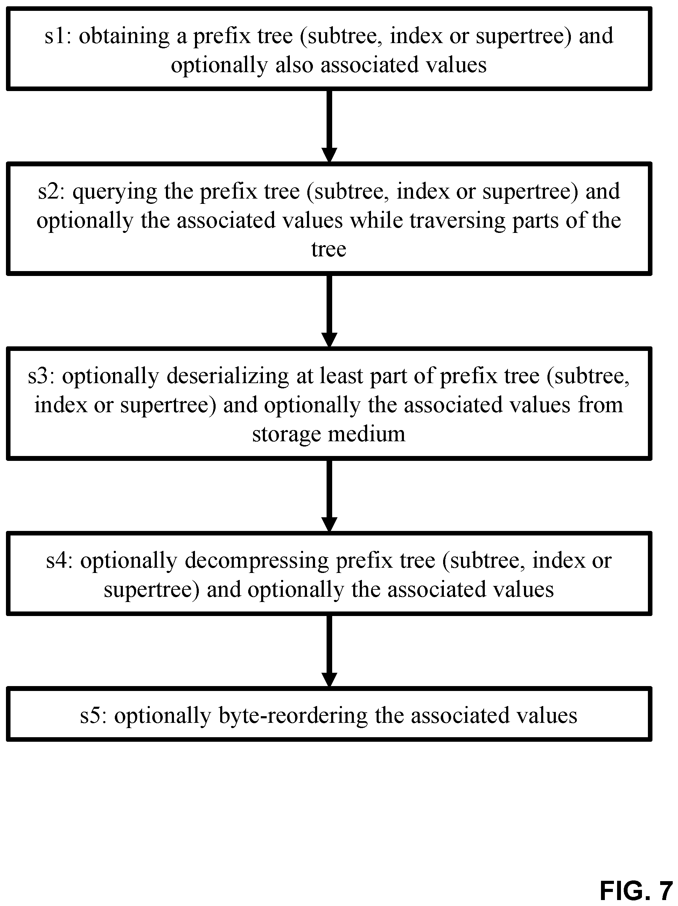

Figure 7 illustrates conceivable steps of a method of querying a database comprising measurement data that has been generated in a method as described above for a subset of measurement data according to invention:
s1: obtaining prefix tree (subtree, index or supertree) and optionally also associated values.
s2: querying the prefix tree (subtree, index or supertree) and optionally the associated values while traversing parts of the tree. That is, when querying for at least one subset of measurement data in the database, only those parts of the prefix tree (subtree, index or supertree) which satisfy the query need to be traversed and at least one subset of 1D coordinates associated with said subset of measurement data is retrieved. Since each node corresponds to a prefix, it can quickly be checked if this prefix satisfies the query. If the prefix of a node indeed satisfies the query, all descendent nodes can then be processed in the same manner. Moreover, if the prefix of a node does not satisfy the query, none of its descendants will satisfy the query either. As a result, large parts of the tree do not need to be traversed at all, saving a lot of time.
s3: optionally deserializing at least part of prefix tree (subtree, index or supertree) and optionally the associated values. That is, if the database, i.e. the prefix tree (subtree, index or supertree) and possibly also the associated values have been written to a storage medium, the prefix tree (subtree, index or supertree) and possibly also the associated values are preferably obtained by reading and deserializing them from storage
s4: optionally decompressing the prefix tree (subtree, index or supertree) and optionally the associated values. That is, if the prefix tree (subtree, index or supertree) and optionally the associated values have been compressed, they are preferably decompressed after deserialization.
s5: optionally byte-reordering the associated values. That is, if the values were byte-reordered before compression, they are preferably byte-reordered after decompression.

Steps s1 and s2 are preferably performed in this order. Steps s3 to s5 might be required to perform step s2, depending on how step s1 was performed.

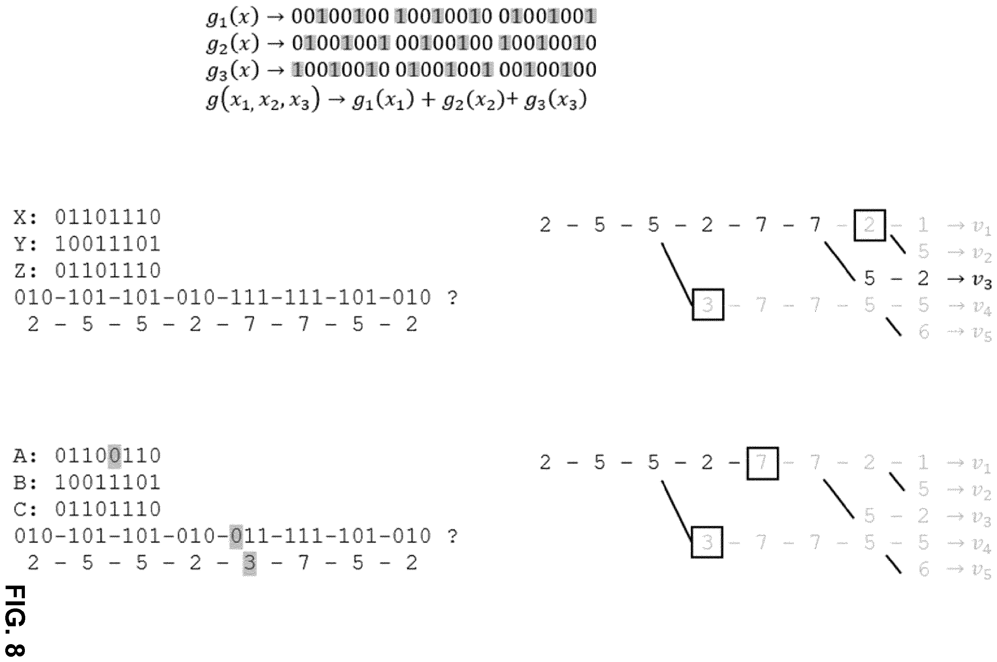

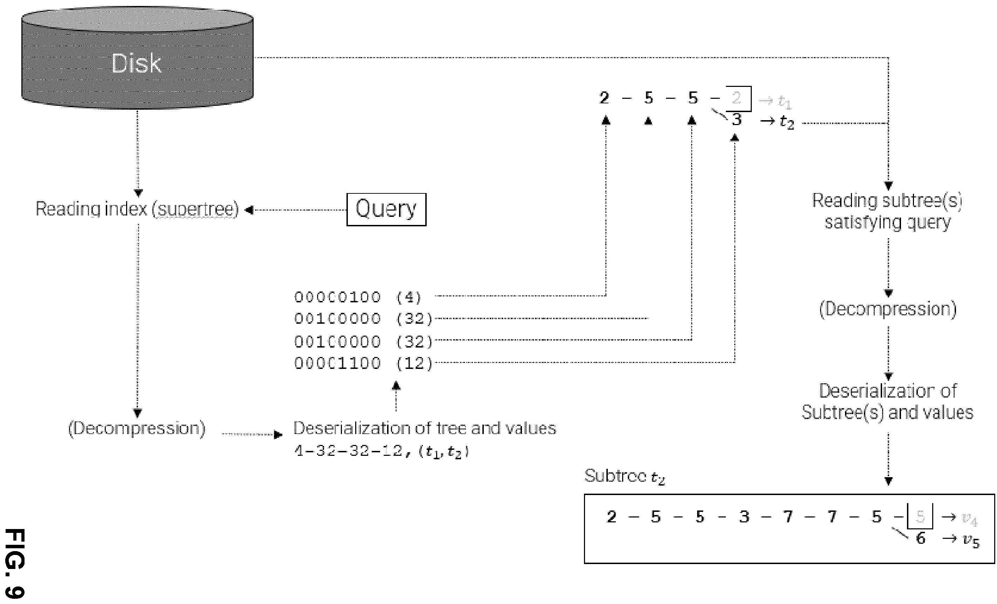

For illustrative purposes only, these steps are now illustrated by means of a numerical example with reference to figures 8 and 9.

That is, figure 8 schematically illustrates a numerical example of querying a subset of measurement data by traversing a prefix tree in step s2 of the method illustrated in figure 7. Here, a query is made for a single measurement datum with 3-dimensional coordinates *x,y,z.* The query for the 3-dimensional coordinate can also be expressed in 1D by applying the same transformation as used when constructing the prefix tree. As the tree is traversed, the nodes in squared boxes 2 and 3 do not satisfy the prefix of the query. As a result, all (grey) nodes to the right of these two nodes do not need to be traversed as their prefix will also not satisfy the query, meaning only 10 nodes are visited instead of all 17 nods of the tree. Similarly, a query is also made for a single measurement datum with 3-dimensional coordinates *a*,*b*,*c*. In this case only 6 of the 17 nodes of the tree need to be traversed to conclude this datum is not present.

Figure 9 schematically illustrates a numerical example of reading measurement data that has been stored to disk after tree splitting and compression. That is, if the measurement data has been written to disk, it is preferably retrieved in several steps. In fact, if the measurement data has been stored in the form of a prefix tree that has been splitted into a subtree and an index such as a supertree, it is preferred that the supertree is read first. If it was compressed, it needs to be decompressed. The deserialized supertree can then be queried to find subtrees satisfying the query as shown in Figure 8. Finally, all subtrees (in this example only *t*₂) can be retrieved by reading it from the appropriate memory addresses as defined in the supertree and deserialize it (after optional decompression).

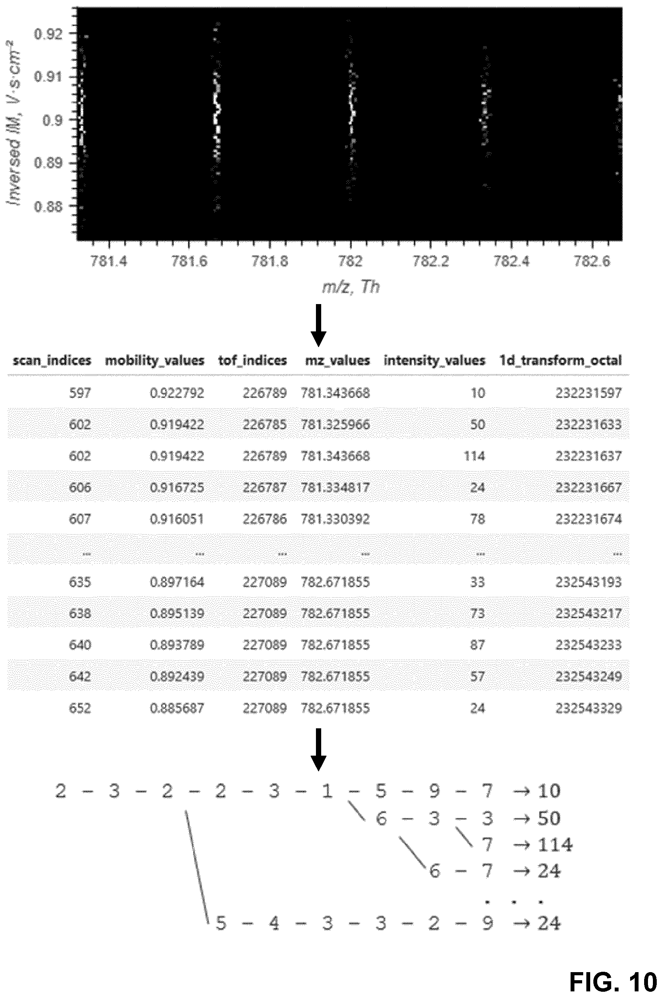

Figure 10 shows measurement data in the form of LC-TIMS-TOF measurement data that is obtained in the coordinates:
1) frame index related to retention time.
1) scan index related to (inversed) ion mobility (IM), and
2) TOF index related to m/z
and wherein the associated intensity values provide the respective values.

For the purpose of illustration, a small section of measurement data is illustrated in the (IM, m/z) domain containing 215 measurement data. Naively storing these measurement data using u32 integers (4 bytes) for each of the dimensions and for the intensity values requires 4 · 32 · 215 = 27520 bits = 3440 bytes.

These coordinates are then transformed with a bijection to 1-dimensional coordinates that are here represented in base 8 (octal). Subsequently, a prefix tree is then constructed from these 1-dimensional to represent all the measurement data.

Said prefix tree and the associated values can be serialized and compressed, resulting in the following storage reduction:
- serializing the prefix tree: 360 bytes
- serializing the associated values: 860 bytes
- full zstd compression off the prefix tree and the associated values: 509 bytes.

As readily becomes apparent from the above, the method according to the invention enables savings in disk space and, because the (compressed) serialized prefix tree (subtree, index or supertree) allows random access in a fast and scalable manner, it also enables savings in processing time.

## Claims

1. A computer-implemented method of storing measurement data of a measurement system in a database on a non-transitory tangible computer-readable storage medium, the method comprising the steps of:
- obtaining *M* unique *N*-dimensional coordinates being associated with the measurement data;
- transforming the *M* unique *N*-dimensional coordinates with a bijection to 1-dimensional coordinates, whereby *M* unique 1-dimensional coordinates are obtained;
- building a prefix tree from the *M* unique 1-dimensional coordinates to represent these 1D coordinates;
- serializing the prefix tree; and
- writing the serialized prefix tree to the non-transitory tangible computer-readable storage medium.

2. The method according to claim 1, wherein in the step of obtaining the *M* unique *N-*dimensional coordinates, values associated to these *M* unique coordinates are also obtained.

3. The method according to any one of the preceding claims, wherein the step of transforming the *M* unique *N*-dimensional coordinates with a bijection to 1-dimensional coordinates comprises the application of at most *N* component functions to each of the *M* unique *N*-dimensional coordinates, whereby *N***M* transformed coordinates are obtained, and
wherein preferably the transformation comprises the summation of the *N* component functions.

4. The method according to any one of the preceding claims, wherein in the step of building the prefix tree, the 1D coordinates are represented in base *x*, preferably in base 8, and/or
wherein, after the step of building the prefix tree, the prefix tree is pruned, and wherein preferably, the pruning is based on a branch density.

5. The method according to any one of the preceding claims, wherein, prior to serializing the prefix tree, the prefix tree is split into at least one subtree, and wherein each of the subtrees provides an independent prefix tree, and
wherein, after splitting the prefix tree into the at least one subtree, the at least one subtree is preferably indexed, preferably with another prefix tree.

6. The method according to any one of the preceding claims, wherein the prefix tree is represented in base *x,* and
wherein, in the step of serializing the prefix tree, each node of the prefix tree is represented as a string of *x* bits with bit *i* set to 1 in the event that said node has a direct descendent *i*, and
wherein the thus serialized nodes are then concatenated either breadth-first or depth-first while ensuring a lexicographical ordering of the 1D coordinates when the tree is traversed.

7. The method according to any one of the preceding claims, wherein, prior to writing to the non-transitory tangible computer-readable storage medium, the serialized prefix tree is compressed.

8. The method according to any one of claims 2 to 7, wherein the values associated to the coordinates are serialized by reordering the values such that their associated 1D coordinates are sorted lexicographically, and/or
wherein, prior to writing to the non-transitory tangible computer-readable storage medium, the values associated to the coordinates are compressed, and
wherein, preferably, during serialization of the values, positional bytes from each value are concatenated.

9. A computer-implemented method of querying a database for a subset of measurement data, wherein the database comprises measurement data of at least one measurement system and has been provided by the steps of:
- obtaining *M* unique *N*-dimensional coordinates being associated with the measurement data;
- transforming the *M* unique *N*-dimensional coordinates with a bijection to 1-dimensional coordinates, whereby *M* unique 1-dimensional coordinates are obtained;
- building a prefix tree from the *M* unique 1-dimensional coordinates to represent these 1D coordinates; and
wherein the method of querying the database comprises the step of:
- querying for at least one subset of measurement data in the database by traversing parts of the prefix tree while querying for at least one subset of 1D coordinates associated with said subset of measurement data.

10. The method according to claim 9, wherein, after building the prefix tree, the provision of the database further comprises the steps of serializing the prefix tree and writing the serialized prefix tree to a non-transitory tangible computer-readable storage medium, and
wherein the method of querying the database further comprises the step of deserializing the prefix tree before querying.

11. The method according to claim 9 or 10, wherein in the step of obtaining the *M* unique *N*-dimensional coordinates in the provision of the database, values associated to these *M* unique coordinates are also obtained, and
wherein the method of querying the database further comprises the step of retrieving the values associated with the coordinates when performing the query.

12. The method according to any of claim 9 to 11, wherein, in the provision of the database, the prefix tree is split into at least one subtree and an index, preferably a supertree, and the at least one subtree is written to a non-transitory tangible computer-readable storage medium, and
wherein the method of querying the database further comprises the step of querying the index such that only the subtrees with a prefix satisfying the query are deserialized and queried.

13. The method according to any one of the preceding claims, wherein the measurement data is at least one of:
- at least one of mass spectrometry (MS) data, mass spectrometry imaging (MSI) data, liquid chromatography (LC) data, trapped ion mobility separation (TIMS) data, time-of-flight (TOF) data or combinations thereof, or
- obtained from the at least one measurement system while performing at least one measurement or obtained from at least one archived format.

14. A computer program product, comprising a non-transitory tangible computer-readable storage medium whose contents cause a processor to perform the method according to any one of claims 1 to 13.

15. A measurement system, preferably a mass spectrometer optionally combined with a liquid chromatography (LC) unit and/or an ion mobility separator (IMS), wherein the measurement system comprises a processor comprising instructions which, when carried out by the processor, causes the processor to carry out the method according to any one of claims 1 to 13.
